# EUROPEAN PATENT APPLICATION

(11) **EP 1 026 854 A2**
(43) Date of publication of application: **09.08.2000**
(21) Application number: 99125246.1
(22) Date of filing: 17.12.1999
(51) Int. Cl.: H04L 12/22, H04L 29/06, H04L 9/00

(54) **Method and system for analyzing the content of encrypted electronic data**

(30) Priority: 22.12.1998 GB 9828341
(71) Applicant: Content Technologies Limited, Theale, Reading, Berkshire, RG7 4RA (GB)
(72) Inventor: Harris, Andrew S., Hermitage, Berkshire RG18 9RH (GB)
(74) Representative: Hoarton, Lloyd Douglas Charles

(57) **Abstract**

A system for analyzing the contents of encrypted data without having access to the private cryptographic information necessary for decryption. The system interacts with a Security Provider (SP) having access to the private cryptographic information in such a manner that the system can gain access to a decrypted copy of encrypted data. In this manner, the SP system can delegate to an authorized instantiation of the system the necessary trust to access decrypted data without delegating the necessary trust to access private cryptographic information. All interaction between the SP and the system occurs through an Isolation API which ensures that only authorized instantiations of the system will obtain decrypted data and that the private cryptographic information accessible to the SP will not be revealed. When the system receives an indication of electronic data that is to be distributed or accessed, the system first determines if the data is encrypted. If so, the system interacts with an SP to obtain a decrypted copy of the data, and may provide to the SP an identifier that verifies the identity of the system. The system analyzes the contents of the decrypted copy to determine if the contents are appropriate (*e.g*., whether they contain compromised data). When necessary, the system modifies the decrypted data to remove compromised data or prevents access to or distribution of inappropriate data. In addition, the system can modify the data by adding information (*e.g*., a legal disclaimer or an indication of system approval).

## Description

### TECHNICAL FIELD

The present invention relates generally to analyzing electronic data, and more particularly to analyzing the content of encrypted electronic data before it is accessed by or distributed to users.

### BACKGROUND OF THE INVENTION

As information is increasingly stored and distributed in electronic form (*e.g.*, documents such as web pages and computer files, and communications from a sender to one or more recipients such as email, web pages, voice mail, paging messages, etc.), it is increasingly important that the contents of such electronic data be accessible. Access to the contents may be useful for a variety of reasons, including performing routine administrative activities such as backups and archival of the data, determining whether the contents include compromised data (*i.e*., data that is not appropriate to be accessed or distributed), and adding various types of information to the data (*e.g*., legal disclaimers or a digital watermark). For example, communications being sent to or from an individual or a member of an organization may contain compromised data such as confidential information (*e.g*., trade secrets or private information), offensive information (*e.g.*, profanity, pornography, racial slurs, defamatory statements, unsolicited advertisements, etc.), and data with functional capabilities (*e.g*., computer viruses, mobile code such as JAVA™ applets or ACTIVEX™ controls, scripts or macros such as those using JAVASCRIPT™ or VISUAL BASIC™, etc.). If such compromised data is present in a communication, it is desirable to remove that data before the communication is distributed, or to block the distribution of the communication completely. When documents are stored, it may be similarly be desirable to detect and remove compromised data or to analyze the contents to ensure accuracy or completeness of information. Thus, both individuals and organizations have the need to be able to access the contents of electronic data, regardless of whether the data is being distributed or is stored in an accessible location.

Content analysis gateways through which distributed communications pass (*e.g*., MIMESWEEPER□ from Content Technologies, Inc.) are one type of system which needs access to the contents of electronic data. Such content analysis gateways can analyze electronic communications in a variety of customizable ways to determine if the contents of the communications are appropriate. However, the increasing need for security creates problems for such systems. In particular, many individuals and organizations use cryptography to ensure that the contents of communications are available only to designated recipients and that the contents of stored documents are available only to authorized users. Cryptographic mechanisms can be implemented in a variety of ways, including the use of one or more passwords, of symmetric encryption keys (*i.e.*, the same key is used to both encrypt and decrypt a document), and of asymmetric public/private key pair encryption (*i.e*., the encryption and decryption keys are different). Unfortunately, however, when electronic data is encrypted, the contents of the encrypted electronic data are not accessible without the private cryptographic information (*e.g*., an authorized user's password or a communication recipient's private encryption key) necessary to decrypt the data. Moreover, it may be undesirable to provide such private cryptographic information to a content analysis system because all users with access to the system (*e.g*., an organization's internal system administrators) would then have access to all of the encrypted data. Thus, access to private cryptographic information must be closely monitored.

Public/private key pair encryption ("public key encryption") provides various advantages over other cryptographic methods, particularly with respect to protection of private key information. For example, one advantage of public key encryption is that while each user closely guards their private key, users' public keys can be widely distributed. This avoids the need to securely transmit private cryptographic information (*e.g*., a password or symmetric encryption key) to each user needing access to encrypted data. Instead, a sender of a message can encrypt the message using the recipient's public key, with the resulting encrypted message able to be decrypted only by the recipient using their private key. Alternately, a sender of a message can encrypt the message using their own private key, and any user will then be able to decrypt the encrypted message only by using the sender's public key. This provides for confirmation that the message actually came from the sender, and is thus a type of a "digital signature" that can verify the identity of the message sender.

Public key encryption can also be efficiently used when a message is to be encrypted for multiple recipients. One method of distributing such a message is to create separate copies of the message for each recipient and then encrypt each recipient's copy using that recipient's public key. A more space-efficient alternative, however, is to create a single copy of the message that is encrypted using a randomly generated symmetric key, referred to as a "session key." Separate copies of the session key (typically much smaller in size than the message) can then be created for each recipient and encrypted using that recipient's public key. Under this scheme, a recipient of the encrypted message and the encrypted session keys can then use their private key to decrypt the appropriate copy of the session key and then use the decrypted session key to decrypt the message. Documents can similarly be stored in encrypted form with a copy of a session key encrypted for each user authorized to decrypt the document.

Public key encryption also allows organizations to create one or more corporate key pairs and require that data encrypted within the organization be accessible with at least one corporate private key (*e.g*., by using the corresponding corporate public key as one of the public keys with which the data is encrypted). A person or computer program with access to the corporate private key (*e.g*., the company president, a system administrator, or an archival program) can then use the private key to decrypt the encrypted data. Such corporate key pairs can be used for data recovery when other authorized users or recipients are not available, and for routine administrative activities such as backups and archival of corporate data. In this manner, access to data can be ensured without requiring access to the private cryptographic information of internal users. Other related alternatives for accessing encrypted information include key escrow and key recovery schemes.

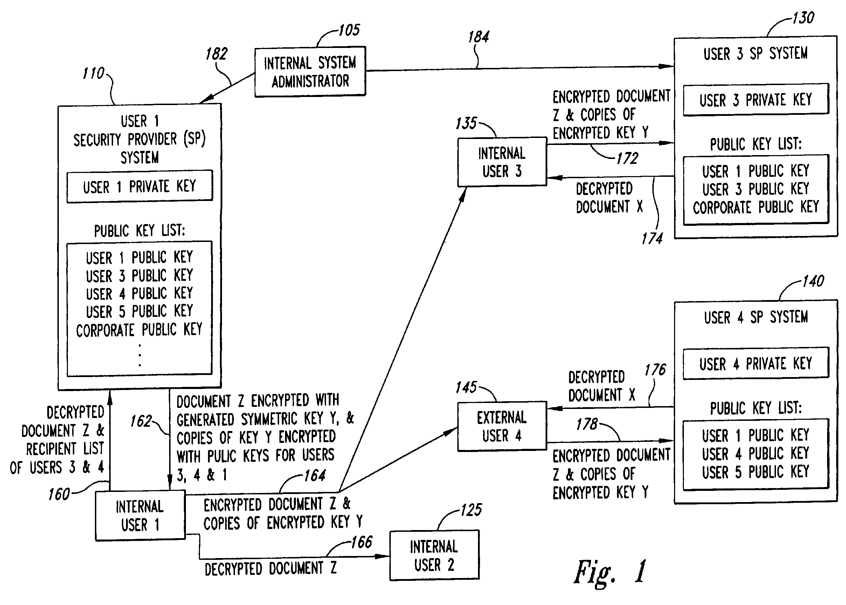

As an example of the use of public key encryption, consider Figure 1 in which user 1 wishes to distribute document Z (*e.g*., an email message) to a variety of recipients. A local copy of a Security Provider (SP) system (110) is used by user 1 (115) for encrypting electronic documents being sent and for decrypting electronic documents being received and/or accessed. There are a variety of such SP systems publicly available, including SECRETS FOR WINDOWS□ from Sapher Servers Limited, PGP PERSONAL PRIVACY□ from Network Associates Inc., and ENTRUST/PKI□ from Entrust Technologies Ltd. Since SP systems typically store or have access to private cryptographic information, access to such systems is closely controlled and the systems may even be granted various security ratings (*e.g*., by a government) that indicates the degree of security provided by the system.

User 1 begins by supplying (160) a decrypted (*i.e*., currently not encrypted) document Z and a recipient list of users 3 and 4 to SP system 110. In the illustrated example, SP system 110 first passes document Z through a one-way hashing function (*e.g.*, a Secure Hashing Algorithm (SHA) or a checksum function) to produce an identifier for document Z in its current form. If document Z is later modified, a new identifier generated for the modified document Z will typically be different than the original identifier, and thus can demonstrate that the document has been modified. After the identifier is produced, SP system 110 encrypts the identifier using user 1's private key, thus producing a digital signature for user 1 that will accompany document Z. After the digital signature is created, SP system 110 next generates a random symmetric session key using one of a variety of algorithms (*e.g.*, Triple-DES), and then encrypts document Z and the digital signature using the session key. Finally, SP system 110 retrieves the public keys for each of the designated recipients, and for each recipient encrypts a copy of the session key with that recipient's public key. In addition, if user 1 wishes to store a copy of document Z in an encrypted format for later access (*e.g*., if the storage system is not secure), SP system 110 can also encrypt a copy of the session key for user 1 or can generate an additional copy of document Z encrypted with only user 1's public key.

Thus, after document Z is encrypted, only someone with access to a private key for one of the recipients can decrypt one of the copies of the session key and then use the decrypted session key to decrypt document Z and the digital signature. When the digital signature is obtained, user 1's public key can then be used to verify that the document was sent by user 1. In addition, decrypting the digital signature also provides access to the original identifier for document Z. The document retrieved by the recipient can then be passed through the same one-way hashing algorithm as was originally used, thus generating an identifier for the received version of the document. If the newly generated identifier matches the original identifier from user 1's digital signature, the recipient can then be assured that the contents of the document have not been modified since the original identifier was generated.

After SP system 110 creates the encrypted version of document Z, it returns (162) the encrypted version of the document and the encrypted copies of the session key to user 1 for distribution (164) to users 3 (135) and 4 (145). Alternately, SP system 110 could itself distribute the documents rather than returning them to user 1 for distribution. User 1 also sends (166) a decrypted version of document Z to user 2 (125). As is indicated, users 1, 2, and 3 are all internal users of an organization, while user 4 is external to the organization. Sending of a decrypted version to user 2 may occur for a variety of reasons, such as because a secure internal network allows messages to be sent to internal users without encryption, because SP system 110 does not have user 2's public key, or because user 2 does not have access to an SP system to allow decryption of the document. When user 3 receives the encrypted document Z, the document is forwarded (172) to a local SP system (130) for user 3. As previously indicated, the SP system 130 uses user 3's private key and user 1's public key to decrypt and verify the received document, and then returns (174) the decrypted version to user 3. User 4 performs a similar process with local SP system (140).

SP systems can also perform additional acts to assist in protecting document Z. For example, the SP systems can be configured to automatically include a corporate public key in the public keys used for encryption. However, in order to ensure that the encryption mechanism works properly, it may be necessary for another user such as a system administrator (155) to have access (182 & 184) to the local SP systems. Such access to the SP systems allows the system administrator to ensure that each SP system has the corporate public key and public keys for all of the other internal users, as well as being properly configured to use the keys. Alternatively, all internal users can share a single master SP system that includes the private key information for each internal user, and the system administrator need only maintain one SP system.

While public key encryption has various advantages, it also has some weaknesses. In particular, if it is necessary to give any user access to another user's private key (*e.g*., the system administrator), a weakness is introduced into the encryption scheme. When given such access, a malicious system administrator could decrypt and access the contents of the documents for all users to whose private keys he has access.

Thus, as previously discussed, organizations and individuals need the ability to access and analyze the contents of electronic data. However, such organizations and individuals may also need to ability to provide strong cryptographic protection for data being stored and distributed. While SP systems may be trusted with private cryptographic information due to their internal security mechanisms, other types of systems such as content analysis systems or backup/archival programs may not be given such trust. Nonetheless, these other systems may need access to the contents of encrypted data. Organizations and individuals may thus be faced with a tradeoff between the need for access to the contents of encrypted data and the need to protect the integrity of the encryption scheme by protecting private cryptographic information.

### SUMMARY OF THE INVENTION

Some embodiments of the present invention provide a method and system for analyzing the contents of encrypted data without having access to the private cryptographic information necessary for decryption. In particular, a Content Processor (CP) system of the present invention interacts with a Security Provider (SP) system having access to the private cryptographic information in such a manner that the CP system can gain access to a decrypted copy of encrypted data. In this manner, the SP system can delegate to an authorized CP system the necessary trust to access decrypted data without delegating the necessary trust to access private cryptographic information. All interaction between the CP and SP systems occurs through an Isolation API which ensures that only authorized CP systems will obtain decrypted data and that the private cryptographic information accessible to the SP system will not be revealed.

One embodiment of the invention involves a computer-implemented method for accessing contents of data encrypted in such a manner that private cryptographic information is needed to gain access to the contents, with the accessing of the contents performed without access to the private cryptographic information. This method involves establishing trustworthiness with a computer-implemented security provider having access to the private cryptographic information, receiving an indication of the encrypted data, and accessing the contents without user input by notifying the security provider of the encrypted data and by receiving from the security provider, based on the trustworthiness, a decrypted copy of the encrypted data such that the contents are accessible. In this manner, access to the contents of the data is gained without gaining access to the private cryptographic information.

In an alternate embodiment, a method for analyzing contents of encrypted electronic messages involves interactions between a message analyzer and a security processor. The message analyzer analyzes contents by receiving an encrypted copy of a message to be distributed from a sender to a recipient in which the contents of the message are inaccessible to the message analyzer while the message is encrypted. The message analyzer then sends an identity verifier to a security provider capable of decrypting the encrypted copy by using private cryptographic information, with the identity verifier intended to verify identity of the message analyzer. Next, the encrypted copy is sent to the security provider and a decrypted copy of the message is received from the security provider, thus enabling the message analyzer to analyze the contents of the decrypted copy to determine if distribution of the message to the recipient is permissible. When it is determined that the distribution is permissible, the message is distributed to the recipient. The security provider receives from the message analyzer the identity verifier and the encrypted copy, and when the identity of the message analyzer is verified by the identity verifier, decrypts the encrypted copy of the message using the private cryptographic information to produce the decrypted copy. Thus, the message analyzer can gain access to the contents of the message without having access to the private cryptographic information.

### BRIEF DESCRIPTION OF THE DRAWINGS

Figure 1 shows an example of an electronic document being distributed using public key encryption.
Figures 2A and 2B are block diagrams illustrating the use of embodiments of the Content Processor system of the present invention.
Figure 3 is a block diagram illustrating the contents and information flow of an embodiment of the Content Processor system.
Figure 4 is an exemplary flow diagram of an embodiment of the SP Interface routine.
Figure 5 is an exemplary flow diagram of the SP Administrator routine.
Figure 6 is an exemplary flow diagram of an embodiment of the Master SP System routine.
Figure 7 is an exemplary flow diagram of an embodiment of the Document Distributor routine.
Figure 8 is an exemplary flow diagram of an embodiment of the Analyze And Modify Document Via Isolation API subroutine.
Figure 9 is an exemplary flow diagram of an embodiment of the Distribute Document subroutine.

### DETAILED DESCRIPTION OF THE INVENTION

An embodiment of the present invention provides a method and system for analyzing the contents of encrypted data without having access to the private cryptographic information necessary for decryption. In particular, a Content Processor (CP) system of the present invention interacts with a Security Provider (SP) system having access to the private cryptographic information in such a manner that the CP system can gain access to a decrypted copy of encrypted data. In this manner, the SP system can delegate to an authorized CP system the necessary trust to access decrypted data without delegating the necessary trust to access private cryptographic information. All interaction between the CP and SP systems occurs through an Isolation API which ensures that only authorized CP systems will obtain decrypted data and that the private cryptographic information accessible to the SP system will not be revealed.

When the CP system receives an indication of electronic data that is to be distributed or accessed, the CP system first determines if the data is encrypted. In some embodiments, the CP system acts as a gateway for an organization such that all communications to and from members of the organization pass through the gateway. When the CP system determines that data is encrypted, the CP system interacts with an SP system through the Isolation API to obtain a decrypted copy of the data. In some embodiments, the CP system also provides to the SP system an identifier that verifies the identity of the CP system as authorized to receive decrypted data. Once the CP system has a decrypted copy of the data, either as initially received or from the SP system, the CP system then analyzes the contents of the decrypted copy to determine if the contents are appropriate (*e.g*., whether they contain compromised data). When necessary, the CP system modifies the decrypted data to remove inappropriate information. Alternately, the CP system can prevent access to or distribution of data whose contents include inappropriate information. In addition, the CP system can modify the data by adding information (*e.g*., a legal disclaimer or an indication of approval by the CP system). If the decrypted data has not been modified, the CP system can distribute or provide access to the original data (whether encrypted or decrypted). Conversely, if the decrypted data has been modified, the CP system can distribute or provide access to the modified data in decrypted form, or can first encrypt the data by supplying the modified data to the SP system for encryption. The operation of the CP system will be described in greater detail below.

In addition to being able to access and analyze the contents of encrypted data, the CP system also allows a user such as a system administrator to perform administrative functions on the SP system, with the Isolation API preventing the administrative user from having access to private key information. For example, a user of the CP system can remove from the SP system the private and public keys for other users, thus preventing those users from accessing or distributing encrypted data through the CP system. When the CP system acts as an organizational gateway through which all communications pass, this allows the administrative user to control which users are allowed to distribute or receive encrypted information. Even if a user (*e.g*., a former employee) retains a copy of private key information and attempts to spoof the distribution of electronic data so that it appears to be from the user's organization, the lack of CP system processing (*e.g*., inclusion of the CP system's digital signature) can identify that the data is from outside the organization.

As mentioned previously, an SP system can also be configured to provide information only to trusted CP systems, and the CP system can be designed to verify its trustworthiness to the SP system. In this way, the CP system can receive a transference of the trust given to the SP system, even if the CP and SP systems are from different vendors. If an unauthorized or modified CP system attempts to interact with the SP system to retrieve decrypted data, the SP system can detect and prevent such access (*e.g*., through the use of digital certificates).

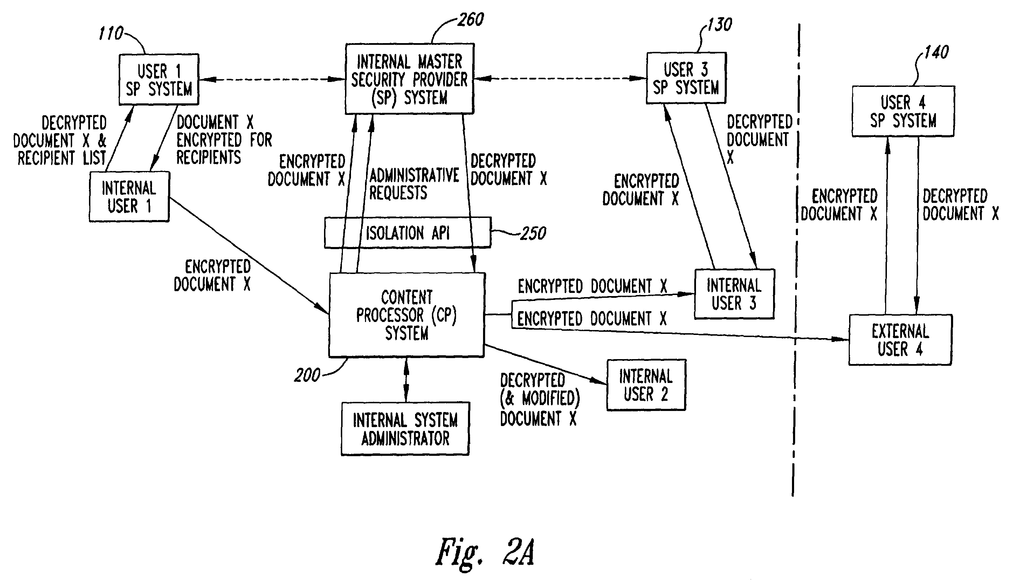

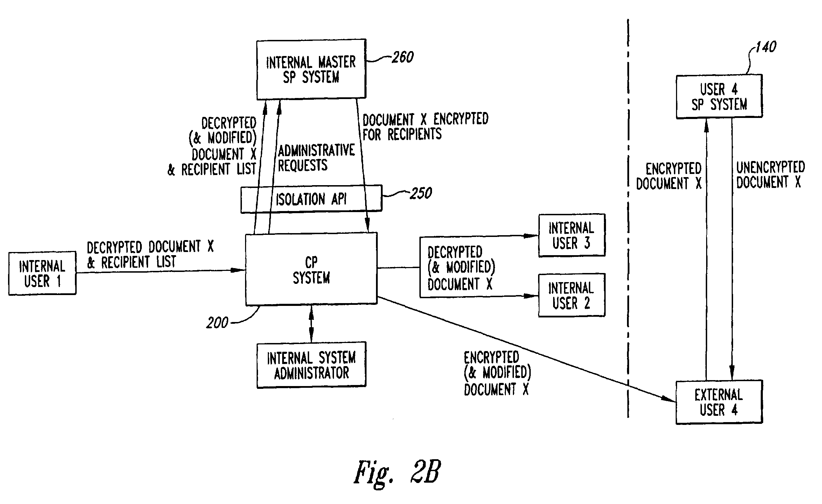

Figures 2A and 2B each demonstrate the use of an embodiment of the CP system. In particular, Figure 2A illustrates a situation in which an internal user of an organization encrypts and then distributes a document to multiple recipients, with CP system 200 analyzing the contents of the encrypted document before distribution is permitted. As shown, internal user 1 first supplies a decrypted document X and a recipient list to a local SP system 110. The recipient list includes internal users 2 and 3 and external user 4. SP system 110 encrypts document X for those recipients (*e.g.*, by using their public keys), and then returns the encrypted document to user 1. When user 1 proceeds to distribute the encrypted document, the CP system obtains the encrypted document for analysis in one of a variety of ways, (*e.g*., by having all distributed data pass through the CP system or by having the data distribution software for all internal users configured to supply distributed data to the CP system).

After the CP system receives the encrypted document, the CP system supplies the document to a master SP system 260 for the organization. In the illustrated embodiment, the master SP system has access to the public and private cryptographic information for all internal users, as well as to the public cryptographic information (*e.g*., public keys) for various external users. After the master SP system receives the encrypted document, it uses private cryptographic information (*e.g*., for an internal recipient designated by user 1, or for user 1 or a corporate key pair if they were included in the recipient list by SP system 110) to decrypt the document. The master SP system then returns a decrypted version of document X to the CP system.

All communication between the CP system and the SP system is conducted through Isolation API 250 which prevents the CP system from having any access to private cryptographic information accessible to the SP system. Those skilled in the art will appreciate that the Isolation API can be implemented in a variety of ways. For example, the Isolation API may be a set of defined functions or libraries which can be invoked by CP and SP components, with the functions defined so as to prevent access by the CP system to private cryptographic information. Alternately, the Isolation API could be a software module that analyzes information flowing through it and prevents cryptographic information from passing from the SP system to the CP system. Those skilled in the art will appreciate that the Isolation API can be implemented in a variety of other ways.

After receiving the decrypted copy of document X, the CP system next analyzes the contents of document X to determine if distribution of the document is appropriate. If distribution is not appropriate (*e.g.*, the document contains compromised data), the CP system can either block distribution or modify the document so that the document is appropriate for distribution. Alternately, the CP system could delay distribution of the document until a user or another software module can perform further analysis and modification. If the document is appropriate for distribution without modification, then the encrypted version of the document that was received by the CP system can be forwarded to the designated recipients. If the document was modified, however, the modified document must first be encrypted if encrypted distribution is desired. In this situation, the CP system provides the modified document to the master SP system and then receives a version of the modified document encrypted for the intended recipients. Finally, the document is forwarded to internal users 2 and 3 and external user 4.

In the illustrated embodiment, the CP system determines that document X must be modified before it can be distributed to internal user 2 and that distribution of a decrypted version of the document is more appropriate for user 2 than an encrypted version. Thus, the CP system forwards a decrypted modified version of document X to internal user 2. Conversely, the CP system determines that both users 3 and 4 should receive encrypted unmodified versions of document X, and thus forwards the original encrypted document to each of these users. These users then use SP systems 130 and 140 respectively to decrypt and access document X. While the illustrated embodiment shows users 1 and 3 having local SP systems distinct from the master SP system, it is possible for these systems to intercommunicate or to be a single SP system. In addition, a system administrator can, as shown, provide various administrative requests (*e.g*., add or delete cryptographic information) to the CP system that will be forwarded to the master SP system through the Isolation API.

Figure 2B shows an embodiment of the CP system in which the internal users of the organization distribute documents to each other that are not encrypted, but in which documents distributed to external users are encrypted. In the illustrated embodiment of Figure 2, user 1 again wishes to distribute document X to users 2, 3, and 4. In this example, document X is first sent to CP system 200 in decrypted form. Since document X is not encrypted, the CP system can immediately perform content analysis of the document and make any modifications necessary. After making any necessary modifications, the CP system can then forward the decrypted (and possibly modified) document to internal users 2 and 3. Since document X is also to be distributed to an external user, however, the CP system provides the modified decrypted document to the master SP system 260 for encryption. The master SP system can then encrypt document X for user 4, and can even use user 1's private cryptographic information to create a digital signature for user 1 if desired. Alternately, or in addition, the SP system could use a private key for the CP system to create a digital signature for the CP system (*e.g*., to indicate that distribution has been approved) to be included with the encrypted document. After receiving the encrypted document, the CP system forwards the encrypted document to external user 4, who in turn uses local SP system 140 to decrypt and access document X. In a similar manner to that shown in Figure 2A, the system administrator can use the CP system to provide various administrative requests to the master SP system.

Those skilled in the art will appreciate that Figures 2A and 2B provide illustrative examples of the use of embodiments of the CP system, and are not intended to limit the scope of the present invention. Various other types of encrypted data (*e.g*., email, voice mail, paging messages, etc.) could be analyzed by the CP system. In addition, encrypted or decrypted messages can similarly be analyzed when distributed from external users such as user 4 to internal users, and the CP system can similarly provide access to stored encrypted data. While the illustrated CP system is a distinct component from the master SP system, the CP and SP systems could also be combined into a single system in which the Isolation API still acts to prevent the CP portion of the system from having access to private cryptographic information. Accordingly, the present invention may be practiced with other computer system configurations.

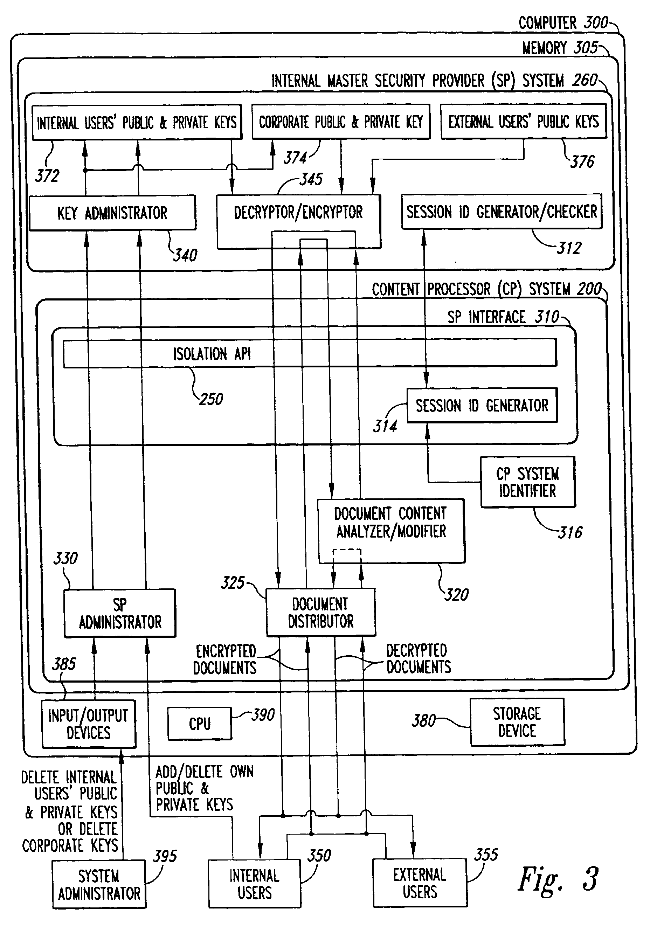

Figure 3 is a block diagram illustrating the contents and information flow of an embodiment of the CP system. In the illustrated embodiment, public key encryption is being used to distribute electronic documents. Figure 3 includes a computer 300 suitable for executing the CP system 200 and the master SP system 260 in memory 305, with the computer also including storage device 380, input/output devices 385, and CPU 390. A system administrator 395 is interacting with the CP system through the use of the input/output devices, and various internal users 350 are also supplying administrative information (*e.g*., cryptographic information to be passed through the CP system to the SP system for storage) to the CP system. The internal users and various external users 355 are also supplying encrypted and decrypted documents that are being analyzed by the CP system.

The CP system includes an SP Interface component 310, a CP System Identifier 316, a Document Content Analyzer/Modifier component 320, a Document Distributor component 325, and an SP Administrator component 330. When the CP system first begins to interact with the SP system, a Session ID Generator 314 of the SP Interface component retrieves the CP System Identifier and provides it to a Session ID Generator/Checker 312 of the SP system. The CP System Identifier has previously been issued to the CP system by a trusted security provider (*e.g*., SP System 260), and serves to verify the identity of the CP system as well as potentially establishing a particular level of security or trustworthiness for this particular CP system. The Identifier includes unique information about the CP system (*e.g*., a checksum of the code) so that the SP system can detect a fraudulent use of the Identifier by another system. In addition, the SP system can be configured with a list of authorized CP systems so that only authorized CP systems will be permitted to interact with the SP system.

In the illustrated embodiment, after the Session ID Generator/Checker receives and verifies the CP System Identifier, it supplies a random numeric session ID to the Session ID Generator. Rather than requiring the SP system to verify the CP System Identifier for each communication, a numeric session ID will instead be used for later communications between the CP system and the SP system. However, if a nonchanging session ID is used (even if random), another system could detect and misappropriate the session ID. Thus, one embodiment of the CP system includes matching random number generation algorithms in both the CP and SP systems. When the SP system generates the random initial session ID, both the SP and CP systems will use this session ID as a seed for the random number generators. The CP system will then generate a new random session ID for each communication, with the matching algorithm and shared initial seed allowing the SP system to independently generate the same sequence of random numbers. Those skilled in the art will appreciate that other ways of providing secure communication between the CP and SP systems are possible.

After the CP system has established that it is a trusted system and the Session ID Generator is ready to generate a sequence of recognized session IDs, the other CP components are able to communicate with the SP system. In order to function effectively, the SP system needs to have access to the public key for each external user who will be sending communications to and receiving communications from internal users, as well as the full key pair for each internal user. In addition, the SP system can include one or more corporate key pairs to facilitate corporate data recovery.

The SP Administrator component communicates with a Key Administrator 340 component of the SP system to perform a variety of administrative tasks, including supplying key information to the SP system. Thus, the system administrator can supply public keys for known external users to the SP system, as well as requesting the SP system to generate a new corporate key pair (thus preventing the system administrator from having access to the corporate private key). In addition, internal users can supply their key pairs to the SP system through the SP Administrator component, and external users can supply their public key information (not shown) through the SP Administrator component. If private key information is supplied to the SP system through the CP system, it is possible for a malicious CP system to retain copies of the private keys. In alternate embodiments, internal users could directly supply their private key information to the SP system (*e.g.*, by having the SP system generate and retain the key information), or CP systems could be authorized for interaction with the SP system only when verified to not retain private key information.

When the SP Administrator component receives key information to be added to the SP system, the SP Administrator component forwards the information to the SP system through the SP Interface component. Upon detecting a message being sent to the SP system, the SP interface component uses the Session ID Generator to generate the next successive session ID and includes that session ID with the message. When the Key Administrator receives the SP Administrator component's message and session ID, the Key Administrator first uses the Session ID Generator/Checker to verify that the current session ID is correct. After the session ID is verified, the Key Administrator then adds the key information to either the internal users' public and private keys 372 or to the external users' public keys 376. When the Key Administrator receives a request to generate a corporate key pair, the Key Administrator generates the key pair and stores it in the corporate public and private key 374.

In addition to adding key information, some embodiments of the CP system allow internal and external users to request that their own key information be removed from the SP system. These requests are sent through the SP Administrator component to the Key Administrator in a similar fashion as requests to add key information. The system administrator can analogously request that a current corporate key pair be deleted from the SP system. If the system administrator has sufficient authorization, the system administrator can also perform various administrative functions for the SP system. One such function is the ability of the system administrator to delete from the SP system key information for other users. Once an internal user's key information has been removed, that internal user can be prevented from receiving, accessing, or distributing encrypted documents. For example, even if an internal user independently encrypts a message (*e.g*., with a personal password) and attempts to distribute it, a gateway CP system can prevent the message from being distributed if the system cannot decrypt and analyze the message. Similarly, if the user attempts to store an independently encrypted message, a CP system performing a periodic backup or scan can detect that the document cannot be decrypted and can remove the document. In a similar fashion, an external user without stored public key information can be prevented from receiving encrypted messages from internal senders or from distributing such documents to internal users. Thus, incoming documents from an external user can be effectively blocked by removing that user's key information, and internal users (*e.g.*, those whose authorization status has changed) can be denied access to stored documents as well as the ability to distribute and receive encrypted documents.

In alternate embodiments, the CP system can control users' access privileges in other ways. For example, multiple corporate key pairs could be defined and used at a hierarchy of levels, such as for various defined groups within the organization. Thus, a group supervisor may have access to a group corporate private key, and if information distributed or received by members of that group is encrypted for the group public key then the supervisor could access that information. The system administrator can also perform other administrative functions for either the SP or CP systems, such as instructing the SP system to periodically review the validity of stored key information or to limit the number of CP systems which can concurrently interact with the SP system. Alternately, the system administrator could change hashing, key generation, or session ID generation algorithms in the CP and SP systems.

After the SP system has access to the appropriate key information, the CP system is able to access the contents of encrypted documents. The Document Distributor component can receive from the internal or external users a variety of encrypted and decrypted documents to be distributed. When the Document Distributor component receives a decrypted document, the Document Distributor component forwards the document to the Document Content Analyzer/Modifier component. Those skilled in the art will appreciate that a variety of types of content analysis can be performed, including having different CP systems each perform a different type of analysis or a given CP system performing multiple types of analysis. In the illustrated embodiment, the Document Content Analyzer/Modifier component determines if compromised data is present in the document. If so, the Document Content Analyzer/Modifier component removes the compromised data if possible, and blocks distribution of the document if the necessary modifications are not possible. In an alternate embodiment, the CP system may not perform modification of documents, and may instead block distribution of such documents or hold the documents in a secure location for processing by a human or another automated system.

If the Document Content Analyzer/Modifier component determines that the document can be distributed (either as-is or as-modified) and at least some of the designated recipients are to receive the document in decrypted form, the Document Content Analyzer/Modifier component returns the decrypted document to the Document Distributor component. The Document Distributor component then sends the document to the appropriate recipients. The form in which a recipient is to receive a document can be determined in a variety of ways, such as an explicit indication from the sender, preference information stored by the CP or SP systems, or by defaulting to the form in which the document was received.

If the Document Content Analyzer/Modifier component determines that the document is to be sent to at least some recipients in encrypted form, the document (either as-is or as-modified) is forwarded to a Decryptor/Encryptor component 345 of the SP system. As with messages from the SP Administrator component, the SP Interface component adds the appropriate session ID to the message before forwarding the message to the Decryptor/Encryptor. After the Decryptor/Encryptor receives the decrypted document, it uses the various key information to encrypt the document as necessary, and then returns the encrypted document to the Document Distributor component for distribution to the appropriate recipients.

Similarly, if the Document Distributor component had originally received an encrypted message, the Document Distributor component would first forward the encrypted message to the Decryptor/Encryptor component for decryption. The Decryptor/Encryptor would then use the key information to decrypt the message before supplying the decrypted document to the Document Content Analyzer/Modifier component for analysis. When the Document Content Analyzer/Modifier component receives the document, it analyzes and modifies the document as described above. If the document is not modified, the Document Content Analyzer/Modifier component can notify the Document Distributor component to forward the encrypted document (*e.g*., a temporarily stored copy) to the appropriate recipients. If the document instead needs to be distributed in decrypted form, the Document Content Analyzer/Modifier component supplies the decrypted document to the Document Distributor component for further distribution. As before, if the document is modified and is to be further distributed in encrypted form, the modified document is sent back to the Decryptor/Encryptor for encryption before the encrypted form of the modified document is forwarded to the Document Distributor component for further distribution.

Those skilled in the art will appreciate that computer system 300 is merely illustrative and is not intended to limit the scope of the present invention. The computer system may contain additional components or may lack some illustrated components. For example, the CP and SP systems could execute on separate computers or could execute as a single system. In addition, those skilled in the art will appreciate that the Isolation API can be implemented in a variety of ways. Accordingly, the present invention may be practiced with other computer system configurations.

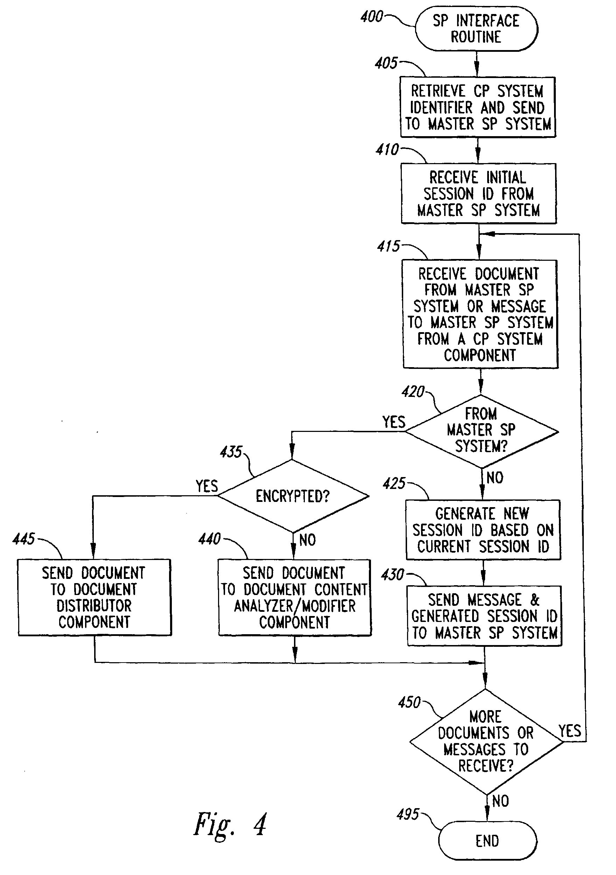

Figure 4 is an exemplary flow diagram of an embodiment of the SP Interface routine 400. The SP Interface routine conveys messages and documents between the SP system and the various other CP system components, using an Isolation API to prevent the CP system from accessing private cryptographic information available to the SP system. The SP Interface routine first establishes an initial connection between the CP system and the SP system in such a manner as to indicate that the CP system is authorized to receive decrypted data, and then accompanies later communications from the CP system to the SP system with an identifier that verifies the identity of the CP system. In the illustrated embodiment, the Isolation API is implemented by allowing only certain types of information to be received from the SP system, those being documents and responses to various defined CP system requests.

The routine begins in step 405 where the CP system identifier is retrieved and sent to the master SP system. The routine continues in step 410 to receive from the master SP system an initial session ID for the CP system. In step 415, the routine then receives a document sent from the master SP system or a message to the master SP system sent from a CP system component. The routine contains to step 420 to determine if a document from the master SP system was received. If not, the routine continues at step 425 to generate a new session ID based on the current session ID, and in step 430 the routine sends the received message and the generated session ID to the master SP system. The new session ID can be generated in a variety of ways, such as by using the initial session ID as a seed for a shared random number generation algorithm.

If it was instead determined in step 420 that a document from the master SP system was received, the routine continues to step 435 to determine if the document is encrypted. If so, the routine continues at step 445 to send the encrypted document to the Document Distributor component for further distribution, and if not, the routine in step 440 sends the decrypted document to the Document Content Analyzer/Modifier component for analysis and possible modification. After steps 430, 440 or 445, the routine continues at step 450 to determine if there are more documents or messages to receive. If so, the routine returns to step 415, and if not, the routine ends in step 495.

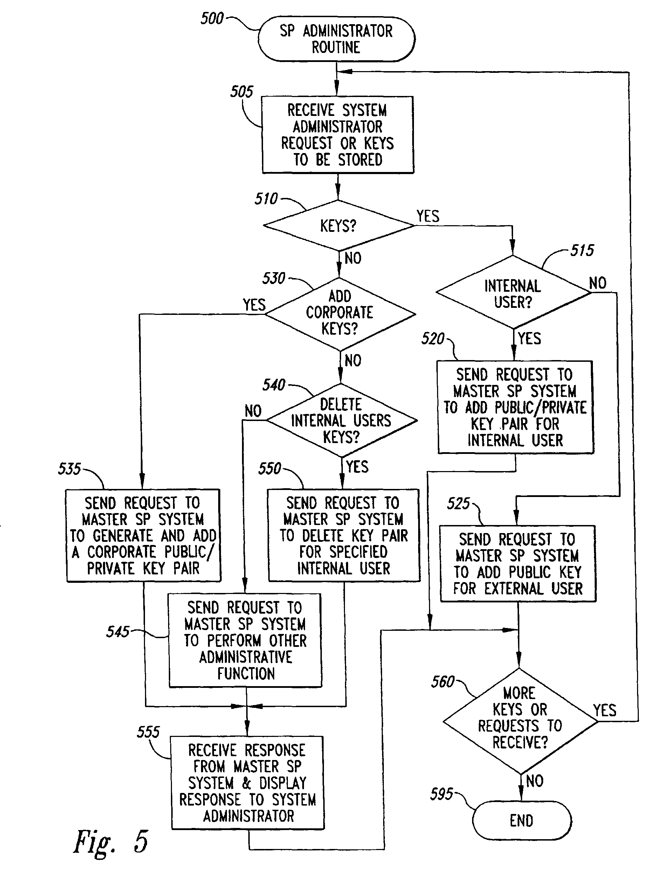

Figure 5 is an exemplary flow diagram of an embodiment of the SP Administrator routine 500. The routine receives key information to be provided to the SP system as well as administrative requests for the SP system, and then forwards the requests or key information to the SP system. The illustrated routine also receives responses to the requests from the SP system, and displays the responses to the user.

The routine begins at step 505 where either a request from a system administrator or key information to be stored is received. The routine continues at step 510 to determine if it was key information was received. The key information may be for users internal or external to an organization, and can be provided in a variety of ways. If key information was received, the routine continues at step 515 to determine if the information is for an internal user. This determination can be made in a variety of ways, such as via an explicit identification, on the basis of from where the information was sent, or by accessing a list of all internal users. If the information is for an internal user, the information should include both the public and private keys for the user, and the routine continues at step 520 to send a request to the master SP system to add the public and private key pair for the internal user to the SP system. If it is instead determined in step 515 that the key information is for an external user, only the public key information will typically be provided and the routine continues at step 525 to send a request to the master SP system to add only the public key for the external user.

If it was instead determined in step 510 that a request from a system administrator user was received, the routine continues at step 530 to determine if the request is to add a corporate key pair. If so, the routine continues at step 535 to send a request to the master SP system to generate and add a corporate key pair to the SP system. If the request is not to add a corporate key pair, the routine continues at step 540 to determine if the request is to delete an internal user's key information. If so, the routine continues at step 550 to send a request to the master SP system to delete the key pair information for a specified internal user. If the request was not to delete an internal user's keys but was for some other authorized administrative function (*e.g*., to remove the key information for an external user), the routine continues at step 545 to send a request to the master SP system to perform the specified function. After steps 535, 545 or 550, the routine continues at step 555 to receive a response to the request from the master SP system and to display the received response to the system administrator. After steps 520, 525 or 555, the routine continues at step 560 to determine if there are more keys or requests to receive. If so, the routine returns to step 505, and if not the routine ends at step 595. Those skilled in the art will appreciate that a variety of other types of requests can be received from a system administrator or other user of the CP system.

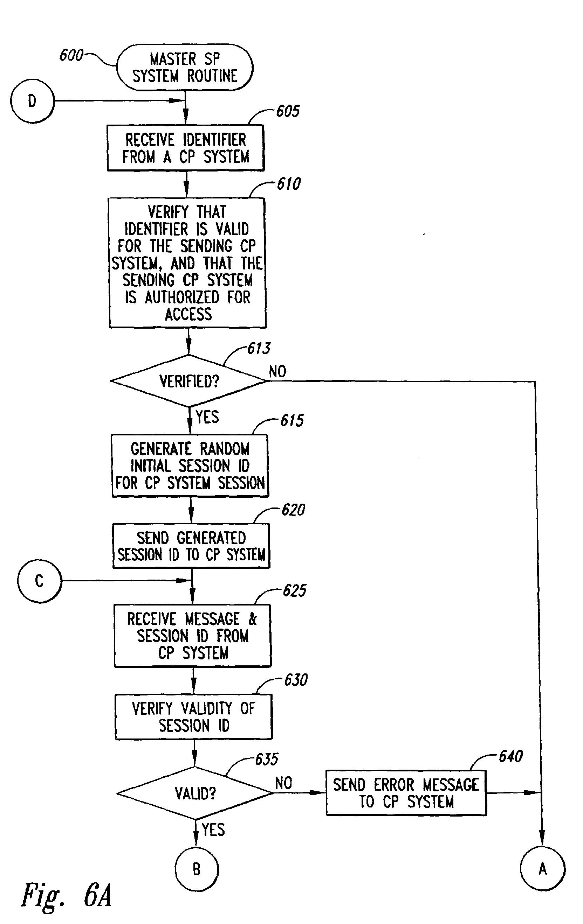

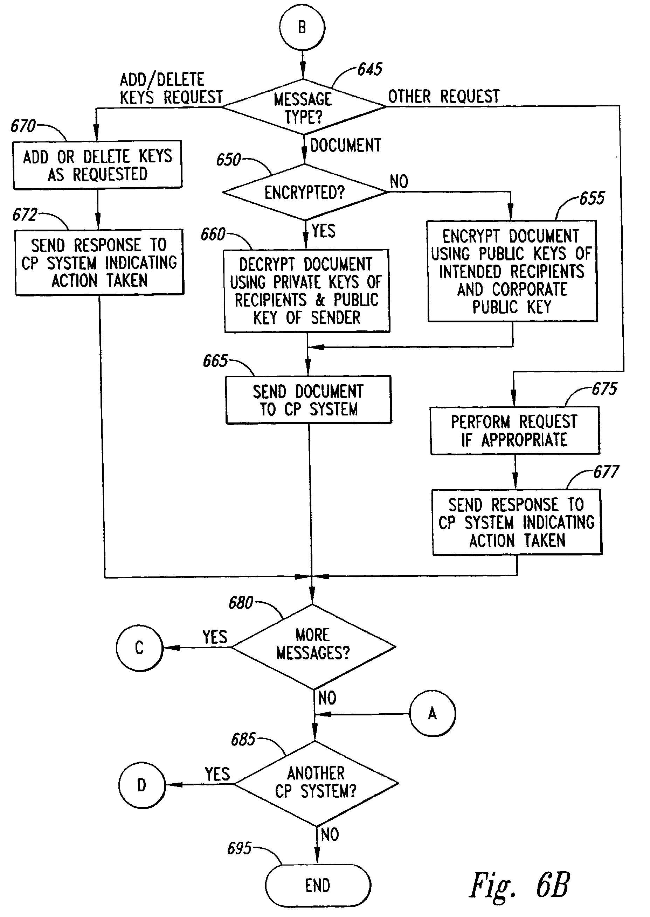

Figure 6 is an exemplary flow diagram of an embodiment of the Master SP System routine 600. The Master SP System routine receives and stores public and private key information for internal users and for corporate data recovery purposes, and stores public key information for external users. Upon receiving requests to decrypt and encrypt documents from an authorized CP system, the routine uses stored key information to perform the requests. In addition, the routine can receive and perform various administrative requests.

The routine begins in step 605 where an identifier is received from a CP system. The routine continues at step 610 to verify if the identifier for the sending CP system is valid and that the sending CP system is authorized to access the SP system. If it is determined at step 613 that the identifier is valid, the routine continues at step 615, and if not the routine continues to step 685. At step 615, the routine generates a random initial session ID for the session with the CP system. This initial session ID will provide the basis for a sequence of later session IDs to be received from the CP system, such as by using the initial session ID as a seed for a shared random number generation algorithm. The routine then continues at step 620 to send the generated session ID to the CP system.

In step 625, the routine next receives a message and a session ID from the CP system. In step 630, the routine verifies the validity of the session ID, and continues to step 635 to determine if the session ID is valid. If not, the routine continues to step 640 to send an error message to the CP system and then continues to step 685. If it is instead determined in step 635 that the session ID is valid, the routine continues at step 645 to determine the type of message received. If a document is received, the routine continues at step 650 to determine if the document is encrypted. If so, the routine continues to step 660 to decrypt the document using the private key of a recipient, and the public key of the sender if a digital signature is included. If it is instead determined in step 650 that the document is not encrypted, the routine continues to step 655 to encrypt the document using the public keys of the intended recipients and the corporate public key. As discussed previously, this can be accomplished using a session key or by having different copies for each recipient. In addition, if the sender of the message is an internal user for whom the SP system has a private key, the SP system can use the private key to create a digital signature. After step 655 or 660, the routine continues at step 665 to send the document to the CP system.

If it was instead determined in step 645 that the message was to add or delete key information, the routine continues at step 670 to add or delete the key information as requested. The deletion of key information can only be performed by an authorized user, such as a system administrator or the owner of the key information. The routine then continues at step 672 to send a response to the CP system indicating the action taken for the request. If it was instead determined in step 645 that the message was some other type of request, the routine continues to step 675 to perform the request if it is appropriate, and then in step 677 sends a response to the CP system indicating the action taken. After steps 665, 672, or 677, the routine continues to step 680 to determine if there are more messages to be received from the current CP system. If so, the routine returns to step 625, and if not the routine continues to step 685. In step 685, the routine determines if there are other CP systems to communicate with the SP system, and if so returns to step 605 to wait for an identifier from a CP system. If it is determined instead in step 685 that there are no other CP systems, the routine continues to step 695 and ends. Those skilled in the art will appreciate that the routine can be modified in a variety of ways, such as by allowing for concurrent access of multiple CP systems to the SP system at one time.

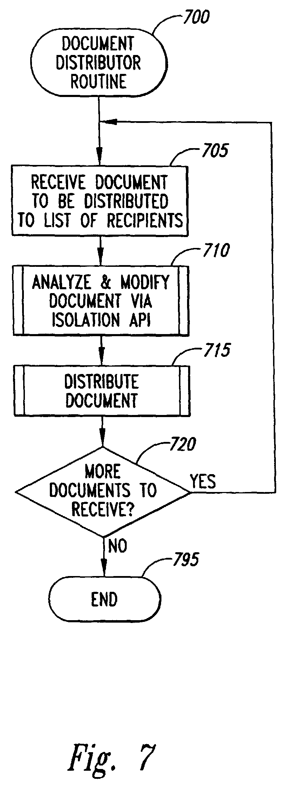

Figure 7 is an exemplary flow diagram of an embodiment of the Document Distributor routine 700. The Document Distributor routine receives documents to be distributed from internal or external users, analyzes the contents of the document and modifies them as necessary (*e.g*., to remove inappropriate information or add information such as a legal disclaimer), and then distributes the documents in either encrypted or decrypted form as appropriate. The routine begins in step 705 where a document is received to be distributed to a list of one or more recipients. The routine continues to step 710 to execute the Analyze And Modify Document Via Isolation API subroutine. In step 715, the routine then executes the Distribute Document subroutine to distribute the document to the recipients. The routine then continues to step 720 to determine if there are more documents to receive. If so, the routine returns to step 705, and if not the routine ends in step 795.

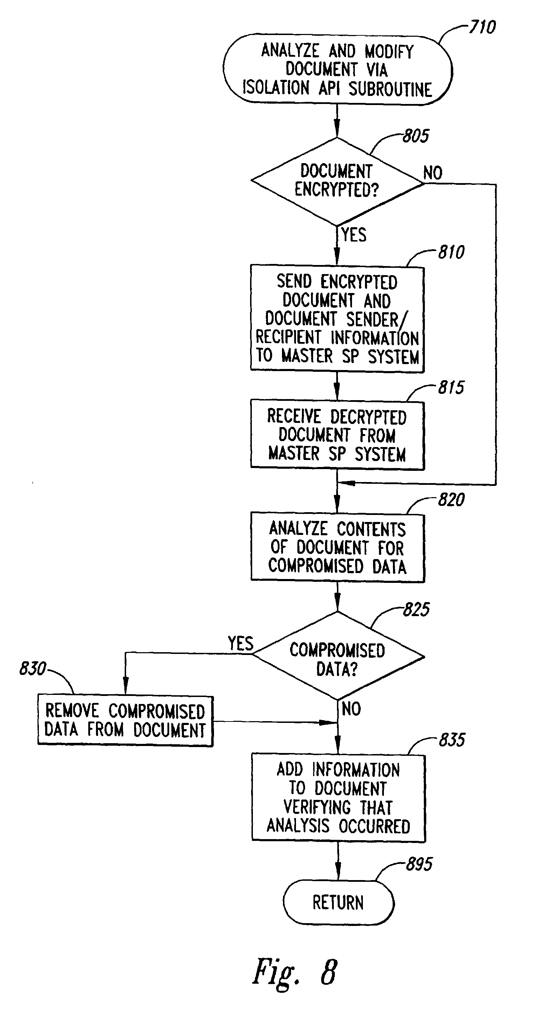

Figure 8 is an exemplary flow diagram of an embodiment of the Analyze And Modify Document Via Isolation API subroutine 710. The subroutine receives a document (either encrypted or decrypted) to be analyzed, has the document decrypted if it is encrypted, analyzes the contents of the decrypted document, and modifies the document if necessary. The routine begins in step 805 where it is determined if the received document is encrypted. If so, the routine continues at step 810 to send the encrypted document, including document sender and recipient information, to the master SP system for decryption. As with other such messages to the SP system, the SP Interface routine will manage the communication as necessary. In step 815, the subroutine then receives a decrypted copy of the document from the master SP system.

After step 815, or if it is instead determined in step 805 that the document is not encrypted, the subroutine continues at step 820 to analyze the contents of the document, such as for compromised data. The routine then continues at step 825 to determine if compromised data was found. If so, the subroutine continues to step 830 to remove the compromised data from the document. After step 830, or if it was determined in step 825 that no compromised data was present, the subroutine continues at step 835 to add information to the document verifying that analysis was performed by the CP system. The subroutine then continues to step 895 and returns. Those skilled in the art will appreciate that contents of a decrypted document can be analyzed in a variety of ways.

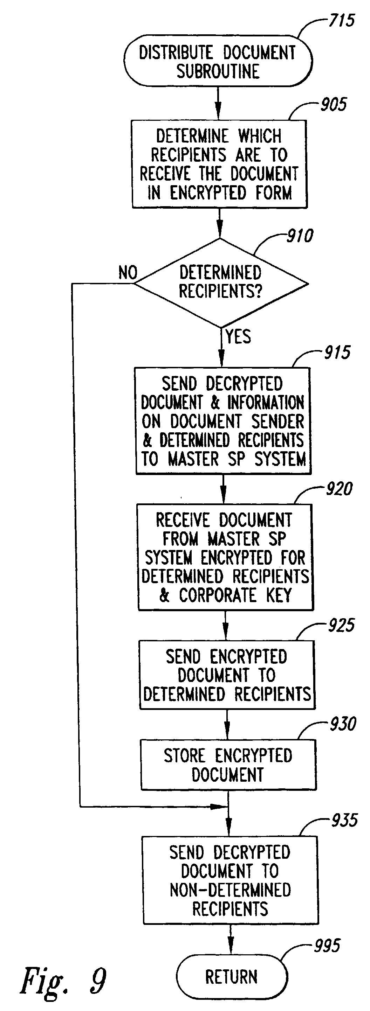

Figure 9 is an exemplary flow diagram of an embodiment of the Distribute Document subroutine 715. The subroutine receives an analyzed decrypted document to be distributed, determines whether to distribute the document in encrypted or decrypted form to the various recipients, and then distributes the document as appropriate. The subroutine begins in step 905 where it is determined which, if any, recipients are to receive the document in encrypted form. The subroutine then continues to step 910 to determine if there are any such determined recipients. If not, the subroutine continues to step 935.

If it is instead determined that there are such determined recipients, the subroutine continues to step 915 to send the decrypted document, including information about the document sender and the recipients, to the master SP system. In step 920, the subroutine receives a copy of the document from the master SP system encrypted for the determined recipients, as well as for a corporate data recovery key. The subroutine continues at step 925 to send the encrypted document to the determined recipients, and in step 930 stores the encrypted document for later corporate data retrieval. In step 935, the subroutine sends the decrypted document to the recipients who are not to receive the document in encrypted form, and in step 995 returns. Those skilled in the art will appreciate that the recipients to receive the document in encrypted form can be determined in a variety of ways, such as by always sending the document in encrypted form if possible, using predefined guidelines for the distribution of documents to internal versus external users, receiving explicit instructions from the sender, or using the original form of the document as received from the sender to indicate whether or not to send the document in an encrypted form.

From the foregoing it will be appreciated that, although specific embodiments of the invention have been described herein for purposes of illustration, various modifications may be made without deviating from the spirit and scope of the invention. Accordingly, the invention is not limited except as by the appended claims.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A computer-implemented method for accessing contents of data encrypted in such a manner that private cryptographic information is needed to gain access to the contents, the accessing of the contents performed without access to the private cryptographic information, the method comprising:
establishing trustworthiness with a computer-implemented security provider having access to the private cryptographic information;
receiving an indication of the encrypted data; and
accessing the contents without user input by,
notifying the security provider of the encrypted data; and
receiving from the security provider based on the trustworthiness a decrypted copy of the encrypted data such that the contents are accessible,
so that access to the contents of the data is gained without gaining access to the private cryptographic information.

2. The method of claim 1 wherein the encrypted data is an encrypted copy of an electronic message to be distributed from a sender to a recipient, wherein the establishing of the trustworthiness with the security provider is performed under control of a message analyzer not having access to the private cryptographic information and includes sending to the security provider an identity verifier for verifying identity of the message analyzer, wherein the notifying of the security provider includes sending an encrypted copy of the data to the security provider, and including:
under control of the security provider,
receiving from the message analyzer the identity verifier;
receiving from the message analyzer the encrypted copy; and
when the identity of the message analyzer is verified by the identity verifier,
decrypting the encrypted copy of the message using the private cryptographic information to produce the decrypted copy; and
sending to the message analyzer the decrypted copy; and
under control of the message analyzer after the receiving of the decrypted copy,
analyzing the contents of the decrypted copy to determine if distribution of the message to the recipient is permissible,
when it is determined that the distribution is permissible, distributing the message to the recipient; and
so that the message analyzer can gain access to the contents of the message without having access to the private cryptographic information.

3. The method of claim 2 wherein the encrypted copy is encrypted using a public key of the recipient, wherein the private cryptographic information used by the security provider for the decrypting includes a private key of the recipient, the public key and the private key forming a key pair, and wherein the message analyzer does not have access to the private key.

4. The method of claim 2 wherein at least a portion of the encrypted copy is additionally encrypted using a private key of the sender, and wherein the security provider additionally uses a public key of the sender for the decrypting of the portion, the public and private keys of the sender forming a key pair.

5. The method of claim 2 wherein the distribution is determined to be impermissible when the analyzing reveals that the contents of the decrypted copy include compromised data, and including:
under control of the message analyzer,
when it is determined that the distribution is impermissible, modifying the decrypted copy to remove the compromised data before distributing the modified copy of the message to the recipient.

6. The method of claim 2 wherein communication between the message analyzer and the security provider uses an Isolation API to prevent the message analyzer from gaining access to the private cryptographic information accessible to the security provider.

7. The method of claim 6 wherein the message analyzer and the security provider are a single software program.

8. The method of claim 2 including:
under control of the message analyzer,
receiving a request from a user that the security provider halt the using of another user's private cryptographic information for decrypting encrypted messages; and
sending the request to the security provider; and
under control of the security provider,
receiving the sent request; and
after the identity of the message analyzer is verified, satisfying the sent request.

9. The method of claim 1 wherein the data is a communication to at least one recipient, and wherein the method is performed before the communication is received by any of the recipients.

10. The method of claim 9 including preventing for each of the recipients the receipt of the communication by that recipient when the contents include information not appropriate to be received by that recipient.

11. The method of claim 9 including, for each of the at least one recipients, when the contents include information not appropriate to be received by the recipient, modifying the communication to remove the information before the communication is received by the recipient.

12. The method of claim 9 wherein at least one of the recipients or a sender of the communication is a member of a group, and wherein the method is performed by a gateway that distributes communications to and from members of the group.

13. The method of claim 1 wherein the data is a document encrypted such that only authorized users can gain access to the contents, and wherein the method is performed before the contents are made available to the authorized users.

14. The method of claim 13 including, for each of the authorized users, preventing the authorized user from gaining access to the contents when the contents of include information not appropriate for the authorized user.

15. The method of claim 13 including, for each of the authorized users, when the contents include information not appropriate to be made available to the authorized user, modifying the document to remove the information before the contents are made available to the authorized user.

16. The method of claim 1 including analyzing the contents to determine if the contents are appropriate to be made available to users with access to the private cryptographic information.

17. The method of claim 16 wherein the contents are determined to not be appropriate when the analyzing reveals that the contents include compromised data.

18. The method of claim 17 wherein the compromised data includes offensive information.

19. The method of claim 17 wherein the compromised data includes inaccurate information.

20. The method of claim 17 wherein the compromised data includes proprietary business information.

21. The method of claim 17 wherein the compromised data includes information private to the creator of the encrypted data.

22. The method of claim 17 wherein the compromised data includes mobile code having functional capabilities.

23. The method of claim 17 including:
when the analyzing reveals that the contents include compromised data,
removing the compromised data from the decrypted copy;
after the removing, encrypting the decrypted copy; and
replacing the encrypted data with the encrypted copy lacking the compromised data.

24. The method of claim 16 including:
when it is determined that indicated data is not encrypted, performing the analyzing of the indicated data without performing the notifying of the security provider or the receiving of the decrypted copy from the security provider.

25. The method of claim 1 wherein the method is performed by software from a vendor distinct from a vendor supplying the security provider.

26. The method of claim 1 wherein the security provider has a specified security rating, and wherein based on the established trustworthiness a performer of the method is treated by the security provider as having a security rating at least as high as the specified security rating.

27. The method of claim 1 wherein the establishing of the trustworthiness includes supplying in an initial communication to the security provider a certification from a trusted source and supplying in later communications to the security provider an identifier indicated by the security provider.

28. The method of claim 1 wherein the establishing of the trustworthiness includes supplying an identity of a performer of the method.

29. The method of claim 1 wherein the security provider has access to private cryptographic information for a plurality of users, and including:
indicating to the security provider to cease using the private cryptographic information of one of the users for decrypting of encrypted data, so that after the indicating data encrypted for the one of the users is unable to be accessed via the security provider.

30. The method of claim 1 wherein the security provider is entrusted to store the private cryptographic information of each member of a specified group and wherein the security provider uses the stored private cryptographic information to provide the decrypted copy when the data is encrypted for one of the members.

31. The method of claim 1 including:
receiving an indication of a second group of data;
when it is determined that the second group of data is encrypted in such a manner that private cryptographic information is needed to access the contents,
notifying a security provider of the encrypted second group of data;
receiving from the security provider a decrypted copy of the second group of data in which the contents are accessible; and
analyzing the decrypted copy to determine if the contents are appropriate to be made available to users with access to the private cryptographic information and to the second group of data; and
when it is determined that the second group of data is not encrypted in such a manner that private cryptographic information is needed to access the contents,
analyzing the indicated second group of data to determine if the contents are appropriate to be made available to users with access to the second group of data, so that the analyzing is performed without access to the private cryptographic information.

32. The method of claim 31 wherein the second group of data is an encrypted communication to at least one recipient, and wherein the method is performed before the communication is received by any of the recipients.

33. The method of claim 31 wherein the second group of data is a document encrypted such that only authorized users can gain access to the contents of the document, and wherein the method is performed before the contents of the document are made available to the authorized users.

34. The method of claim 31 including preventing users from gaining access to the contents when the contents include information not appropriate to be made available.

35. The method of claim 31 including:
when it is determined that the second group of data is encrypted in such a manner that private cryptographic information is needed to access the contents,
supplying to the security provider an identifier to verity that a performer of the method is trusted to receive the decrypted copy.

36. The method of claim 31 wherein the security provider is entrusted to store the private cryptographic information of each member of a specified group, and wherein the security provider uses the stored private cryptographic information to provide decrypted copies of stored data encrypted for the members and of encrypted data communicated to and from the members.

37. The method of claim 1 wherein the establishing of the trustworthiness is performed by a sender, and including:
under control of the security provider,
receiving an identifier from the sender, the identifier to verify that the sender is trusted to access the contents of the data even though the sender does not have access to the private cryptographic information;
receiving an indication of the encrypted data;
when the identifier verifies that the sender is to be trusted, providing to the sender access to the contents of the encrypted data without providing access to the private cryptographic information by,
decrypting the encrypted data using the private cryptographic information; and
sending a decrypted copy of the data to the sender, so that the sender can analyze the contents of the data.

38. The method of claim 37 wherein the data is a communication encrypted for at least one recipient, wherein the sender is not one of the recipients, and wherein the method is performed before the communication is received by any of the recipients.

39. The method of claim 37 wherein the data is a document encrypted such that only authorized users can gain access to the contents of the document, wherein the sender is not one of the authorized users, and wherein the method is performed before the contents of the document are made available to the authorized users.

40. The method of claim 37 wherein the sender prevents users from gaining access to the contents when the contents are not appropriate to be made available.

41. The method of claim 37 wherein the private cryptographic information of each member of a specified group is stored, wherein decrypting of encrypted data stored for the members and communicated to and from the members uses the stored private cryptographic information, and wherein the decrypted stored or communicated data is analyzed by the sender after the decrypting.

42. A computer-readable medium containing instructions for controlling a computer system to access contents of data encrypted in such a manner that private cryptographic information is needed to gain access to the contents, the accessing of the contents performed without having access to the private cryptographic information, by:
establishing a level of trustworthiness with a security provider having access to the private cryptographic information;
receiving an indication of the encrypted data; and
accessing the contents by,
notifying the security provider of the encrypted data; and
receiving from the security provider based on the trustworthiness a decrypted copy of the encrypted data such that the contents are accessible.

43. The computer-readable medium of claim 42 wherein the data is a encrypted communication to at least one recipient, and wherein the computer accesses the contents before the communication is received by any of the recipients.

44. The computer-readable medium of claim 42 wherein the data is a document encrypted such that only authorized users can gain access to the contents of the document, and wherein the computer accesses the contents before the contents of the document are made available to the authorized users.

45. The computer-readable medium of claim 42 wherein the computer is further controlled to prevent users from gaining access to the contents of the data when the contents include information not appropriate to be made available.

46. The computer-readable medium of claim 42 wherein the security provider is entrusted to store the private cryptographic information of each member of a specified group, and wherein the security provider uses the stored private cryptographic information to provide decrypted copies of stored data encrypted for the members and of encrypted data communicated to and from the members.

47. The computer-readable medium of claim 42 wherein the computer is further controlled to analyze the decrypted copy to determine if the contents are appropriate to be made available.

48. The computer-readable medium of claim 42 wherein the security provider has access to private cryptographic information for a plurality of users, and wherein the computer is further controlled to indicate to the security provider to cease using the private cryptographic information of one of the users for decrypting of encrypted data, so that after the indicating data encrypted for the one of the users is unable to be accessed via the security provider.

49. A computer system for accessing contents of data encrypted in such a manner that private cryptographic information is needed to gain access to the contents, the accessing of the contents performed without having access to the private cryptographic information, comprising:
a content analyzer that receives an indication of the encrypted data and that accesses the contents by notifying a security provider of the encrypted data, the security provider having access to the private cryptographic information, and by receiving from the security provider a decrypted copy of the encrypted data such that the contents are accessible; and
a memory in which the content analyzer can be executed.

50. The computer system of claim 49 wherein the content analyzer additionally establishes a level of trustworthiness with the security provider that enables the receiving of the decrypted copy.

51. The computer system of claim 49 further comprising:
the security provider that receives the notification of the encrypted data from the content analyzer and that provides to the content analyzer access to the contents of the encrypted data without providing access to the private cryptographic information by decrypting the encrypted data using the private cryptographic information and by sending a decrypted copy of the data to the content analyzer.

52. The computer system of claim 51 further comprising:
a storage device for storing the private cryptographic information in a manner not accessible to the content analyzer.

53. The computer system of claim 49 further comprising:
an Isolation API through which communication between the message analyzer and the security provider passes, the Isolation API to prevent the message analyzer from gaining access to the private cryptographic information accessible to the security provider.

54. The computer system of claim 49 wherein the content analyzer additionally analyzes the decrypted copy to determine if the contents are appropriate to be made available.

55. The computer system of claim 54 wherein the data is a encrypted communication to at least one recipient, and wherein the content analyzer analyzes the contents before the communication is received by any of the recipients.

56. The computer system of claim 54 wherein the data is a document encrypted such that only authorized users can gain access to the contents of the document, and wherein the content analyzer analyzes the contents before the contents of the document are made available to the authorized users.

57. The computer system of claim 54 wherein the content analyzer additionally prevents users from gaining access to the contents of the data when it is determined that the contents are not appropriate.

58. The computer system of claim 49 wherein the security provider has access to private cryptographic information for a plurality of users, and wherein the content additionally indicates to the security provider to cease using the private cryptographic information of one of the users for decrypting of encrypted data, so that after the indicating data encrypted for the one of the users is unable to be accessed by the content analyzer.

59. A computer program adapted to perform all the steps of any one of claims 1 to 41 when the program is run on a computer.
